# DEMANDE DE BREVET EUROPEEN

(11) **EP 1 553 677 A1**
(43) Date de publication de la demande: **13.07.2005**
(21) Numéro de dépôt: 04293010.7
(22) Date de dépôt: 16.12.2004
(51) Int. Cl.: H02J 7/00

(54) **Equilibrage des tensions de générateurs électrochimiques de batterie rechargeable, par circuits à dipole(s)**

(30) Priorité: 16.12.2003 FR 0314701
(71) Demandeur: SAFT, 93170 Bagnolet (FR)
(72) Inventeur: Petitdidier, Xavier, 86000 Poitiers (FR)
(74) Mandataire: Cabinet Hirsch

(57) **Abrégé**

Une batterie (BAT) comporte au moins deux modules (Mi), montés en série par leurs bornes (B) et comprenant chacun au moins un générateur électrochimique (Gi), et des circuits d'équilibrage à dipôle(s) (Ci) montés chacun en parallèle aux bornes (B) de l'un des modules (Mi) et chargés d'induire au niveau du module correspondant un courant de décharge permanent fonction de la tension à ses bornes.

## Description

L'invention concerne le domaine des batteries de générateurs électrochimiques, et plus particulièrement les batteries rechargeables pourvues de dispositifs d'équilibrage des tensions des modules de générateurs électrochimiques qui les constituent.

Certaines batteries rechargeables sont constituées d'au moins deux modules montés en série et comprenant chacun au moins un générateur électrochimique (ou générateur secondaire ou rechargeable, ou encore accumulateur).

La tension mesurée aux bornes de ces batteries dépendant de l'état de charge des générateurs électrochimiques constituant leurs modules, cet état de charge fait donc fréquemment l'objet d'une surveillance par des dispositifs de contrôle de tension ou d'équilibrage, de manière à éviter que les générateurs électrochimiques ne fassent l'objet de surcharges ou de fortes décharges de nature à réduire les performances des batteries mais surtout à limiter leur durée de vie.

De très nombreux dispositifs d'équilibrage ou de contrôle de tension ont été proposés. Ils peuvent être répartis en deux principaux types.

Un premier type regroupe les dispositifs comportant un circuit dédié conçu spécifiquement pour un type de batterie donné et donc pour un nombre donné (généralement inférieur ou égal à quatre) de modules en série correspondant à une tension donnée. Chaque circuit dédié comporte généralement un module de traitement numérique, tel qu'un ASIC, chargé de comparer des mesures effectuées sur les différents modules et de décider des actions à entreprendre au niveau desdits modules. Ce type de dispositif est généralement peu coûteux, mais il présente l'inconvénient de ne pas être adaptable.

Un second type regroupe les dispositifs comportant un système de type analogique, prenant différents états en fonction de comparaisons de mesures effectuées sur les différents modules. Ce type de dispositif est généralement adaptable, mais du fait de sa complexité et des problèmes liés aux modes communs entre circuit, il est généralement limité à des tensions inférieures à 100 Volts.

Aucun dispositif de l'art antérieur n'apportant une entière satisfaction, l'invention a donc pour but d'améliorer la situation.

Elle propose à cet effet une batterie comportant au moins deux modules, montés en série par leurs bornes et comprenant chacun au moins un générateur électrochimique, et des circuits d'équilibrage à dipôle(s) montés chacun en parallèle aux bornes de chaque module et chargés d'induire au niveau du module correspondant un courant de décharge permanent fonction de la tension à ses bornes.

On entend ici par « dipôle » un composant dipolaire ou une combinaison de composants dipolaires montés en série et présentant un état bloqué et un état passant en fonction de la tension à ses bornes.

Ainsi, en choisissant de façon appropriée les composants (dipôles) constituant un circuit d'équilibrage, on peut induire un courant de décharge permanent rendant négligeable le courant d'autodécharge du module associé.

Si cela s'avère nécessaire (en raison du courant d'autodécharge concerné), chaque module peut être raccordé par ses bornes à un circuit d'équilibrage comprenant plusieurs dipôles montés en parallèle et chargés d'induire conjointement au niveau du module un courant de décharge permanent plus important, fonction de la tension à ses bornes.

Les circuits d'équilibrage peuvent être réalisés de différentes manières. Par exemple, chaque dipôle d'un circuit d'équilibrage peut comporter au moins une diode électroluminescente présentant des caractéristiques choisies en fonction de la tension nominale aux bornes du module correspondant, de sa résistance à l'état passant ou bloqué et de sa tension dite « de coude » caractérisant son passage de l'état bloqué à l'état passant. Dans une première variante, chaque dipôle d'un circuit d'équilibrage peut comporter au moins deux diodes électroluminescentes montées en série et présentant des caractéristiques choisies en fonction de la tension nominale aux bornes du module correspondant, de leurs résistances à l'état passant ou bloqué et de leurs tensions de coude. Dans une deuxième variante, chaque dipôle d'un circuit d'équilibrage peut comporter une ou plusieurs diodes électroluminescentes montée(s) en série avec au moins un dipôle auxiliaire, tel qu'une résistance, présentant des caractéristiques choisies en fonction de la tension nominale aux bornes du module correspondant et des caractéristiques de la ou des diode(s) électroluminescente(s) (notamment leurs résistances à l'état passant ou bloqué et leurs tensions de coude). Dans une troisième variante, chaque dipôle d'un circuit d'équilibrage peut comporter au moins une diode Zener montée en série avec au moins un dipôle auxiliaire, tel qu'une résistance et/ou une ou plusieurs diode(s) électroluminescente(s), les diode Zener et dipôle(s) auxiliaire(s) présentant des caractéristiques choisies en fonction de la tension nominale aux bornes du module correspondant, de leurs résistances à l'état passant ou bloqué et de leurs tensions de coude.

Lorsque les modules de la batterie sont identiques, les circuits d'équilibrage à dipôle(s) correspondants sont identiques.

L'invention est particulièrement bien adaptée aux batteries dont les générateurs électrochimiques sont choisis parmi les générateurs au lithium, comme par exemple les générateurs lithium / ion (Li/Ion), les générateurs argent / zinc et les générateurs à polymères. Mais, d'une manière générale, l'invention s'applique à toutes les batteries dans lesquelles les différents générateurs électrochimiques doivent présenter sensiblement la même tension en leurs bornes afin que les performances soient optimales.

D'autres caractéristiques et avantages de l'invention apparaîtront à l'examen de la description détaillée ci-après, et des dessins annexés, sur lesquels :
- la figure 1 illustre de façon schématique un exemple de réalisation d'une batterie rechargeable selon l'invention,
- la figure 2 illustre schématiquement une première variante de réalisation d'un circuit d'équilibrage selon l'invention,
- la figure 3 illustre schématiquement une deuxième variante de réalisation d'un circuit d'équilibrage selon l'invention, et
- la figure 4 illustre schématiquement une troisième variante de réalisation d'un circuit d'équilibrage selon l'invention.

Les dessins annexés pourront non seulement servir à compléter l'invention, mais aussi contribuer à sa définition, le cas échéant.

L'invention a pour objet de permettre un équilibrage simple, à faible coût et adaptable, des tensions aux bornes des modules de générateurs électrochimiques qui constituent les batteries rechargeables.

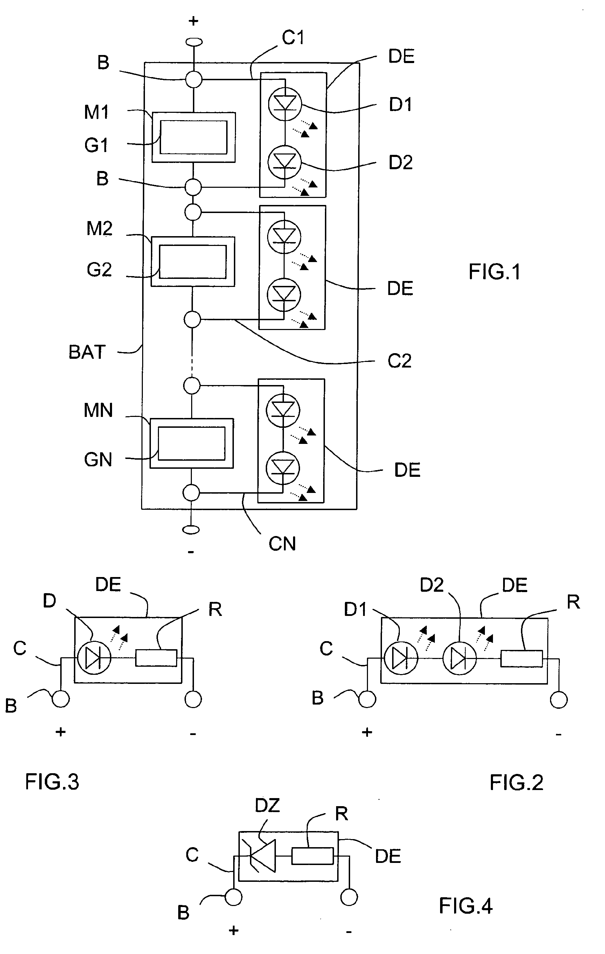

Dans l'exemple illustré sur la figure 1, la batterie rechargeable BAT, selon l'invention, comprend des modules Mi (ici i= 1 à N, N étant au moins égal à deux) comportant chacun un générateur électrochimique Gi, comme par exemple un générateur rechargeable de type lithium-ion (Li/Ion).

L'invention n'est pas limitée à ce seul type de générateur rechargeable. Elle s'applique également, notamment, aux générateurs argent / zinc et aux générateurs à polymères.

Par ailleurs, l'invention n'est pas limitée aux modules Mi ne comportant qu'un unique générateur rechargeable. Elle s'applique également aux batteries dont les modules Mi comprennent plusieurs générateurs électrochimiques Gij, montés en série et/ou en parallèle.

D'une manière générale l'invention s'applique à toutes les batteries dans lesquelles les différents générateurs électrochimiques G doivent présenter sensiblement la même tension en leurs bornes B de sorte que leurs performances soient optimales.

Selon l'invention, l'équilibrage de la tension aux bornes B des modules Mi de la batterie BAT s'effectue à l'aide de circuits d'équilibrage à dipôle(s) Ci, ci-après appelés circuits Ci.

Plus précisément, selon l'invention on raccorde un circuit d'équilibrage à dipôle(s) Ci aux bornes B de chaque module Mi, dans un montage en parallèle.

On entend ici par « circuit d'équilibrage à dipôle(s) » un circuit comportant un dipôle DE ou au moins deux dipôles DE montés en parallèle. Par ailleurs, on entend par « dipôle » un ensemble comportant au moins un composant dipolaire, tel qu'une diode électroluminescente ou une diode Zener ou une association d'une diode (électroluminescente ou Zener) et d'une résistance, et présentant un état bloqué et un état passant en fonction de la tension à ses bornes.

Chaque circuit d'équilibrage à dipôle(s) Ci est chargé d'induire au niveau du module Mi, auquel il est raccordé en parallèle, un courant de décharge permanent fonction de la tension à ses bornes B et de nature à rendre négligeable, par rapport à lui, le courant d'autodécharge du module Mi.

Le courant traversant le (ou les) dipôle(s) d'un circuit Ci étant fonction de la tension à ses (leurs) bornes, qui sont également celles B du module Mi correspondant, plus la tension est élevée, plus le courant traversant (ou courant de décharge, ou encore courant de « by-pass ») est élevé.

Par conséquent, lorsqu'un module Mi présente un niveau de charge supérieur à celui des autres modules Mj (j≠i), il présente un courant de décharge plus élevé et donc se décharge plus vite qu'eux. En d'autres termes, lorsque tous les modules Mi présentent sensiblement la même tension à leurs bornes B, ils présentent sensiblement le même courant de décharge.

Par conséquent, en présence d'un déséquilibre d'autodécharge des modules Mi, la batterie BAT selon l'invention fait l'objet d'une compensation automatique.

En fait, on peut assimiler le courant I_{module} qui traverse un module Mi à la somme du courant d'autodécharge I_{autodécharge} de ce module et du courant de décharge I_{dipôle}(s) circulant dans le circuit Ci (c'est-à-dire traversant son ou ses dipôles).

Dès que le courant de décharge I_{dipôle(s)} est très grand devant le courant d'autodécharge I_{autodécharge}, typiquement supérieur à 100, et de préférence supérieur à 1000, le courant d'autodécharge I_{autodécharge} peut être considéré comme négligeable devant le courant de décharge I_{dipôle(s)}, de sorte qu'en première approximation on a I_{module} = I_{dipôle(s)}.

Les caractéristiques du ou des dipôles constituant chaque circuit Ci sont donc choisies de sorte que la condition mentionnée ci-dessus soit vérifiée, permettant ainsi un équilibrage naturel et intrinsèque de la batterie BAT. Si cela s'avère nécessaire (en raison de la tension aux bornes B des modules Mi), chaque module Mi peut être raccordé à un circuit d'équilibrage comportant au moins deux dipôles montés en parallèle.

Un certain nombre de dipôles ou de combinaisons de dipôles permettent de vérifier la condition précitée.

Un premier type de dipôle DE comprend les diodes électroluminescentes (ou LED pour « Light Emitting Diode »). Ces dernières sont particulièrement intéressantes car elles induisent un courant de décharge I_{dipôle(s)} inférieur à 3 µA lorsque la tension à leurs bornes B est inférieure à 3,3 Volts. Par exemple, pour une tension égale à environ 2,7 Volts (qui correspond à une faible tension dans le cas de générateurs Gi de type lithium/ion), le courant de décharge I_{dipôle(s)} est inférieur à 0,1 µA. Grâce à de telles caractéristiques (dans leur état bloquant) les diodes électroluminescentes permettent d'éviter une décharge complète de la batterie BAT.

Lorsque le dipôle DE d'un circuit Ci comporte deux diodes électroluminescentes D1 et D2, montées en série, comme illustré sur la figure 1, le courant de décharge I_{dipôle(s)} qui les traverse (dans leur état passant) est supérieur à environ 6 mA en présence d'une tension à leurs bornes B supérieure à 4 Volts. Par conséquent, lorsque le courant d'autodécharge I_{autodécharge} est inférieur à 0,1 µA (ce qui est habituel dans un générateur électrochimique G standard), on obtient un rapport I_{dipôle(s)} /I_{autodécharge} supérieur à 60000. Un tel agencement satisfait donc particulièrement bien à la condition précitée.

En choisissant des diodes électroluminescentes présentant des caractéristiques différentes de celles mentionnées ci-avant, on peut obtenir un rapport I_{dipôle(s)} /I_{autodécharge} différent. Par conséquent, on peut adapter les caractéristiques des diodes électroluminescentes en fonction de la tension nominale à équilibrer au niveau de chaque module Mi.

Si cela s'avère nécessaire, le dipôle DE peut, comme illustré sur la figure 2, comporter au moins un dipôle auxiliaire, comme par exemple une résistance R, monté en série avec les deux diodes électroluminescentes D1 et D2, de manière à induire conjointement un courant de décharge adapté à la tension nominale aux bornes des modules Mi du fait de sa résistance à l'état passant ou bloqué et de sa tension de coude.

Au lieu de comporter deux diodes électroluminescentes montées en série, le dipôle DE d'un circuit d'équilibrage Ci peut comporter, comme illustré sur la figure 3, une unique diode électroluminescente D1 montée en série avec au moins un dipôle auxiliaire, comme par exemple une résistance R.

On peut également envisager que le dipôle DE ne soit constitué que d'une unique diode électroluminescente, comme par exemple une diode dite « blanche ».

Dans une autre variante, le dipôle DE d'un circuit d'équilibrage Ci peut comporter, comme illustré sur la figure 4, au moins une diode Zener DZ montée en série avec au moins un dipôle auxiliaire, tel qu'une résistance R ou une diode électroluminescente. La résistance est nécessaire car à l'état passant la diode Zener DZ est équivalente à une résistance d'environ 10 Ohms. Dans ce cas, il est préférable, pour des questions de performance, que la résistance R utilisée soit faible, typiquement comprise entre 100 et 10000 Ohms.

L'utilisation de diode(s) électroluminescente(s) présente un avantage par rapport aux autres types de composant dipolaire du fait qu'il permet de vérifier le bon fonctionnement des modules. Par exemple un modèle de diode électroluminescente peut être allumé lorsque la tension aux bornes B du module Mi est supérieure à environ 3,5 Volts, tandis qu'il est éteint lorsque ladite tension est inférieure à environ 3 Volts.

Quel que soit le mode de réalisation du circuit d'équilibrage Ci, les caractéristiques de son ou ses dipôles DE (et donc de son ou ses composants) sont choisies en fonction de la tension nominale aux bornes du module Mi correspondant, de sa résistance à l'état passant ou bloqué et de sa tension de coude.

Il est important de noter qu'en présence de modules Mi identiques, les circuits d'équilibrage à dipôle(s) Ci sont tous identiques. Mais, en présence de modules Mi différents, les circuits d'équilibrage à dipôle(s) Ci diffèrent de manière à être respectivement adaptés aux modules Mi correspondants.

Grâce à l'invention, les batteries ne sont pas limitées en nombre de modules de générateur(s) électrochimique(s) montés en série, puisqu'il suffit de coupler chaque module à un circuit d'équilibrage adapté à sa tension nominale.

Par ailleurs, l'invention offre un équilibrage particulièrement simple et de faible, voire très faible, coût, permettant ainsi son utilisation dans de nombreuses applications.

L'invention ne se limite pas aux modes de réalisation de batterie décrits ci-avant, seulement à titre d'exemple, mais elle englobe toutes les variantes que pourra envisager l'homme de l'art dans le cadre des revendications ci-après.

## Revendications

1. Batterie (BAT) rechargeable comportant au moins deux modules (Mi) montés en série par leurs bornes et comprenant chacun au moins un générateur électrochimique (Gi), **caractérisée en ce qu'**elle comprend des circuits d'équilibrage à dipôle(s) (Ci) respectivement montés en parallèle aux bornes (B) desdits modules (Mi) et agencés pour induire en permanence au niveau du module correspondant un courant de décharge fonction de la tension à ses bornes.

2. Batterie selon la revendication 1, **caractérisée en ce que** chaque module (Mi) est raccordé par ses bornes (B) à un circuit d'équilibrage (Ci) comprenant au moins deux dipôle(s) (DE) montés en parallèle et agencés pour induire conjointement au niveau dudit module un courant de décharge permanent fonction de la tension à ses bornes (B).

3. Batterie selon l'une des revendications 1 et 2, **caractérisée en ce que** chaque dipôle (DE) présente au moins un état bloquant et un état passant.

4. Batterie selon la revendication 3, **caractérisée en ce que** chaque dipôle (DE) comporte au moins une première diode électroluminescente (D1) de caractéristiques choisies en fonction de la tension nominale aux bornes (B) du module (Mi) correspondant, de sa résistance à l'état passant ou bloqué et de sa tension dite « de coude ».

5. Batterie selon la revendication 4, **caractérisée en ce que** chaque dipôle (DE) comporte au moins une seconde diode électroluminescente (D2) montée en série avec ladite première diode électroluminescente (D1) et de caractéristiques choisies en fonction de la tension nominale aux bornes (B) du module (Mi) correspondant, de sa résistance à l'état passant ou bloqué et de sa tension dite « de coude ».

6. Batterie selon l'une des revendications 4 et 5, **caractérisée en ce que** chaque dipôle (DE) comporte au moins un dipôle auxiliaire (R) monté en série avec ladite première diode électroluminescente (D1) et présentant des caractéristiques choisies en fonction de la tension nominale aux bornes (B) du module (Mi) correspondant et des caractéristiques desdites première (D1) et/ou seconde (D2) diodes électroluminescentes.

7. Batterie selon la revendication 3, **caractérisée en ce que** chaque dipôle (DE) comporte au moins une diode Zener (DZ) montée en série avec au moins un dipôle auxiliaire (R), lesdits diode Zener (DZ) et dipôle auxiliaire (R) présentant des caractéristiques choisies en fonction de la tension nominale aux bornes (B) du module (Mi) correspondant, de sa résistance à l'état passant ou bloqué et de sa tension dite « de coude ».

8. Batterie selon l'une des revendications 6 et 7, **caractérisée en ce que** ledit dipôle auxiliaire est choisi dans un groupe comprenant au moins une résistance (R) et une diode électroluminescente.

9. Batterie selon l'une des revendications 1 à 8, **caractérisée en ce que** lesdits modules (Mi) étant identiques, lesdits circuits d'équilibrage à dipôle(s) (Ci) correspondants sont identiques.

10. Batterie selon l'une des revendications 1 à 9, **caractérisée en ce que** chaque générateur électrochimique (Gi) est choisi dans un groupe comprenant au moins les générateurs au lithium, et en particulier les générateurs lithium / ion (Li/Ion), les générateurs argent / zinc et les générateurs à polymères.
